# EUROPÄISCHE PATENTANMELDUNG

(11) **EP 2 466 158 A1**
(43) Veröffentlichungstag der Anmeldung: **20.06.2012**
(21) Anmeldenummer: 11009792.0
(22) Anmeldetag: 12.12.2011
(51) Int. Cl.: F16B 13/00, F16B 13/06

(54) **Verfahren zum Setzen von mehrfach geschlitzten und mit einem Innengewinde versehenen Metalldübeln**

(30) Priorität: 17.12.2010 DE 102010055000
(71) Anmelder: Brehm, Bernhard, 75365 Calw-Stammheim (DE)
(72) Erfinder: Brehm, Bernhard, 75365 Calw-Stammheim (DE)
(74) Vertreter: Ludewig, Rita

(57) **Zusammenfassung**

Die Erfindung betrifft ein Verfahren zum Setzen von mehrfach geschlitzten und mit einem Innengewinde versehenen Metalldübeln in Gestein, armierten Beton, Beton und Mauerwerk sowie Stahl, Ytong, Holz oder dergleichen, bestehend aus einer mehrfach geschlitzten und mit Innengewinde (1.1) versehenen Metallhülse (1), deren Stirnfläche (1.2) keine mittige Bohrung aufweist, gekennzeichnet dadurch, daß die Metallhülse (1) an der, Stirnfläche (1.2) und an einem Teil der sich daran anschließenden äußeren Umfangsfläche (1.3) mit galvanisch aufgetragenen Diamant- und/oder synthetischen Diamantsplittern (1.4), versehen wird und eine mehrfach geschlitzte Spannhülse (2) und ein Spannkonus (3) sowie ein, am Spannkonus mit einer Sollbruchstelle (3.2) einstückig angeformten Auszugsbolzen (3.1), in der Metallhülse (1) vormontiert werden, wobei der Auszugsbolzen (3.1) rückseitig aus der Metallhülse (1) herausragt, daß die vormontierte Metallhülse (1) auf einen Adapter gesteckt wird, der mit einer für Gesteine nutzbaren Elektrobohrmaschine kompatibel ist, wobei die Metallhülse (1) unter Rotation bündig in das Gestein eingelassen und während des Rotationsvorganges im geschlitzten Innenbereich hinterschnitten und somit aufgespreizt wird.

## Beschreibung

Die Erfindung betrifft ein Verfahren zum setzen von, mehrfach geschlitzten und mit einem Innengewinde versehenen, Metalldübeln in Gestein, armierten Beton, Beton und Mauerwerk sowie Stahl, Ytong, Holz oder dergleichen.

Die bekannten Verfahren zum Setzen von Metalldübeln sind gekennzeichnet durch eine Vielzahl von Arbeitsgängen wie ein Loch bohren in bis zu drei Etappen mit unterschiedlichen Werkzeugen und einer Schlagbohrmaschine, Dübel einsetzen, mit einem Gewindedom oder Schlaganker den Dübel spreizen und den Gewindedom heraus drehen oder ziehen.

Aus der DE 3041640 ist ein Verfahren zur Befestigung von Dübeln in hartem oder weichem Mauerwerk sowie ein Bohrwerkzeug und Dübel zur Durchführung des Verfahrens bekannt, bei dem in das Mauerwerk ein konisch hinterschnittenes, sich zur Bohrlochöffnung hin verjüngendes Loch gebohrt und anschließend der aus einer Spreizhülse und einem Spreizkegel bestehende Dübel in das Loch eingesetzt und durch Eintreiben des Spreizkegels bis zum Anliegen an die Innenwand des Loches aufgeweitet wird, dadurch gekennzeichnet, daß in einem ersten Verfahrensschritt ein erster, zylindrischer Lochabschnitt einer vorgegebenen ersten Länge gebohrt wird, daß im zweiten Verfahrensschritt, ausgehend innerhalb des ersten Lochabschnitts ein zweiter Lochabschnitt mit in Bohrrichtung konstant zunehmendem Durchmesser, und ein daran ansetzender dritter, zylindrischen Lochabschnitt gebohrt wird, dessen Durchmesser gleich dem Durchmesser des ersten Lochabschnitts ist, daß im dritten Verfahrensschritt die zylindrische Spreizhülse mit aufgesetztem, sich zur Bohrlochöffnung verjüngenden Spreizkegel mit Preßsitz in das Bohrloch hinein gedrückt wird, und daß anschließend der Spreizkegel mittels einer am Spreizkegel zu befestigenden Zugstange axial zur Bohrlochöffnung hin gezogen wird, bis die Außenflächen der Spreizhülse an der Innenwand des konischen zweiten Lochabschnitts formschlüssig anliegen und dann im Dübel befestigt werden und daß der Dübel im Bohrloch mit dem Mauerwerk verklebt wird.

Um dieses Verfahren zu realisieren sind mehrere Bohrer, eine verschiebliche Hülse mit Kulissenführung, eine Federkraft, eine ausschwenkbare Platte und axiale Aussparungen für den Abtransport des Bohrkleins erforderlich. Es ist zeit- und kostenaufwendig und erfordert eine Schlagbohrmaschine, die sehr viel Lärm erzeugt.

Die DE 2810503 offenbart ein Verfahren zum Befestigen eines Spreizdübels in einem Bohrloch unter Verwendung einer metallischen Spreizhülse mit im vorderen Abschnitt vorhandenen Längsschlitzen, mit einer sich in diesem Abschnitt nach vom verjüngenden Innenbohrung und mit einem Innengewinde für einen Schraubenbolzen im hinteren Abschnitt der Innenbohrung, durch Aufspreizen der Spreizhülse unter Eintreiben eines Spreizkonus in den vorderen Abschnitt der Innenbohrung und anschließendem Einpressen einer plastischen oder flüssigen Füllmasse aus der Innenbohrung der Spreizhülse durch deren Längsschlitze bzw. zusätzliche Öffnungen hindurch in den freien Zwischenraum zwischen Spreizhülse und Bohrloch, dadurch gekennzeichnet, daß als Füllmasse ein, den Korrosionsschutz des Spreizdübels dienendem Werkstoff verwendet wird. Der Erfindung lag die Aufgabe zugrunde, ein Verfahren zum setzen von Dübeln zu schaffen, welches bei einem Spreizdübel mit metallischen, korrosionsgefährteten Teilen einen sicheren Korrosionsschutz gewährleistet, ohne daß Mängel in der Verankerung oder beim Setzen des Spreizdübels in Kauf genommen werden müssen.

Aus der DE 2432642 ist ebenfalls ein Verfahren zum Setzen eines, ein Spreizelement enthaltenen Dübels in einer Aufnahmeöffnung, bekannt, bei dem der das Spreizelement enthaltende Dübel über Führungsprofile in die Aufnahmeöffnung eingeführt und mittels eines, das Führungsprofil axial durchsetzenden, auf das Spreizelement wirkenden Stößels gespreizt wird, wobei der auf das Spreizelement wirkende Stößel mittels Pulverkraft angetrieben wird. Auch bei diesem Verfahren muß vor dem Einsetzen eines komplettierten Dübels separat ein Loch in das Gestein gebohrt werden.

Es war deshalb Aufgabe der Erfindung ein Verfahren zum Setzen von mehrfach geschlitzten Metalldübeln zu finden, bei dem die Anfertigung der Bohrung und das Setzen des Dübels in Gestein, armierten Beton, Beton und Mauerwerk sowie Stahl, Ytong, Holz oder dergleichen in einem Arbeitsgang durchführbar und eine erheblich stärkere Haltekraft zu erreichen ist, das eine hohe Zeit- und Kosteneinsparung ermöglicht, Vibrationsschäden im zu bearbeitenden Material vermeidet und das einen erheblichen Arbeitsschutzeffekt gewährleistet, indem wesentlich leisere und kürzere Bohrarbeiten realisierbar sind und keine Schlagbohrmaschinen und Dübelschußgeräte zum Einsatz kommen müssen.

Die Aufgabe wird mit den Merkmalen des Anspruchs 1 dadurch gelöst, daß die Metallhülse an der in das Material eindringenden Stirnfläche, die keine mittige Bohrung aufweist, und an einem Teil der sich daran anschließenden äußeren Umfangsfläche mit galvanisch angeordneten, Diamant- und/oder synthetischen Diamantsplittern, polykristallinen Diamantsplittern, Hartmetallsplittern oder mit einem gesinterten Diamantsegment versehen wird und die mehrfach geschlitzte Spannhülse und der Spannkonus sowie der, an dem Spannkonus mit einer Sollbruchstelle einstückig angeformter Auszugsbolzen, vor dem Setzvorgang in die mehrfach geschlitzte Metallhülse eingesetzt und als Baugruppe vormontiert wird, wobei der Auszugsbolzen rückseitig aus der Metallhülse herausragt, daß die vormontierte Metallhülse auf einen Adapter gesteckt wird, der mit einer kompakten, für Gesteine aller Art nutzbaren, Elektrobohrmaschine kompatibel ist und über den die Metallhülse bei Rotation als Bohrer fungiert und bündig in das Gestein eingelassen und während des Rotationsvorganges die Metallhülse im geschlitzten Innenbereich, durch die Spannhülse und den Spannkonus, hinterschnitten und somit aufgespreizt wird, wobei der entstehende Hinterschnitt die Haltekraft des Dübels, in Abhängigkeit der Bohrtiefe und des Durchmesser sowie des Materials um ein mindestens 10- faches der bisherigen Setzverfahren erhöht und daß anschließend die Rotation ausgeschaltet und der Spannkonus mit dem Auszugsbolzen verspannt wird, bis der Auszugsbolzen durch die, zwischen dem Spannkonus und dem Auszugsbolzen angeformte Sollbruchstelle am Spannkonus abbricht und aus der Metallhülse herausfällt oder herauszunehmen ist.

Besonders hervorzuheben ist es, daß die Metallhülse mit galvanisch aufgetragenen, Diamant- und/oder synthetischen Diamantsplittern, polykristallinen Diamantsplittern, Hartmetallsplittern oder mit einem gesinterten Diamantsegment versehen wird. Die Diamant- und Hartmetallsplitter wirken als Schneiden und gestatten die Benutzung der Metallhülse als Bohrwerkzeug. Außerdem kann die Bohrung des Dübellochs und das Setzen des Dübels gleichzeitig in einem Arbeitsgang erfolgen. Die Möglichkeit, daß die komplettierte Metallhülse auf einen Adapter, der mit einer kompakten, für Gesteine aller Art nutzbaren, Elektrobohrmaschine kompatibel ist, gesteckt und mit dieser in das Mauerwerk zu bohren und einzusetzen ist, gestattet darüber hinaus, daß keine verschiedenen und teuren Steinbohrer und vor allem keine Schlagbohrmaschinen und Dübelschußgeräte mit den ihnen eigenen Vibrationen und Geräuschkulissen zum Einsatz kommen müssen.

Der Einsatz von kompakten Elektrobohrmaschinen verringert insbesondere die Vibration, die mit der bekannten Technik häufig zur Schädigung des Betons in Form von Mikrorissen führen. Außerdem wird die, das Gehör des Menschen schädigende, Geräuschkulisse durch die Verwendung von Diamantsplittern oder Hartmetallschichten auf der Metallhülse als Bohrwerkzeug erheblich minimiert, weshalb auch für die Arbeitskräfte lästige, Lärmschutzmaßnahmen entfallen können.

Vorteilhaft ist es darüber hinaus, daß während des Rotationsvorganges die Metallhülse im geschlitzten Innenbereich gleichzeitig durch die Spannhülse und den Spannkonus, hinterschnitten und somit aufgespreizt wird. Nach Abschalten der Rotation wird durch hohen Druck auf den Auszugspolzen der Spannkonus verspannt, bis der Auszugsbolzen durch eine, zwischen dem Spannkonus und dem Auszugsbolzen angeformte Sollbruchstelle am Spannkonus abbricht und beim Zurücknehmen der Bohrmaschine, aus der Metallhülse herausfällt oder herausgenommen werden kann. Das ein- und ausschrauben des Auszugbolzens entfällt, wodurch ebenfalls Arbeitszeit einzusparen ist.

Hervorzuheben ist jedoch vor allem der Vorteil, der sich daraus ergibt, daß das bohren des Dübellochs und setzen des Dübels in nur einem einzigen Arbeitsgang durchführbar ist, wodurch sich der Zeit- und Kostenaufwand insgesamt, erheblich verringert.

Von weiterem Vorteil ist, gemäß der Ansprüche 2 und 3, die geringe Stärke der galvanisch aufgebrachten Diamant- und/oder synthetischen Diamantsplitter, polykristallinen Diamantsplitter, Hartmetallsplitter oder des gesinterten Diamantsegments, die auf der gesamten zur Verfügung stehenden, an der, in das Material eindringenden, mehrfach geschlitzten Stirnfläche und an der daran anschließenden Umfangsfläche der Metallhülse, die bis zum Ende der axial angeordneten Schlitze an der Metallhülse verläuft.

Die sehr harten Diamant- und/oder synthetischen Diamantsplitter, polykristallinen Diamantsplitter, Hartmetallsplitter oder das gesinterte Diamantsegment auf der Metallhülse wirken als Schneiden und ersetzen die bisher für das separate Anbringen von Bohrlöchern erforderlichen Steinbohrer und Schlagbohrmaschinen. Die vergleichsweise dünne Stärke der, auf die Metallhülse galvanisch aufzutragenden, Diamant- und/oder synthetischen Diamantsplitter, polykristallinen Diamantsplitter, der Hartmetallsplitter oder des gesinterten Diamantsegments ist nur so dimensioniert, daß sie beim Bohrvorgang mit der Metallhülse im wesentlichen verbraucht wird. Trotz des Einsatzes auch von teurem Schneidmaterial ist der erforderliche Kostenaufwand niedriger, als der bisher notwendige Aufwand für die Steinbohrer und Schlagbohrmaschinen.

Schließlich führt die Nutzung handelsüblicher mehrfach geschlitzter Metalldübel mit Innengewinde, nach Anspruch 4, die keine zentrische Bohrung in der, in das Material eindringenden, Stirnseite aufweisen, zu einer revolutionären Mehrfachnutzung der Metalldübel nicht nur als Dübel, sondern gleichzeitig als Bohrer.

Die Erfindung soll nachstehend anhand eines Ausführungsbeispiels näher beschrieben werden, die in der Zeichnung näher dargestellt ist. Dabei zeigen:
- Fig.1: eine geschnittene Seitenansicht durch eine Betonwand mit einer teilweise geschnittenen galvanisch beschichteten Metallhülse komplettiert mit einer Spreizhülse und einem Spannkonus mit Auszugsbolzen in vier Phasen eines Arbeitsganges.
- Fig.2: eine perspektivische Seitenansicht von Fig.1

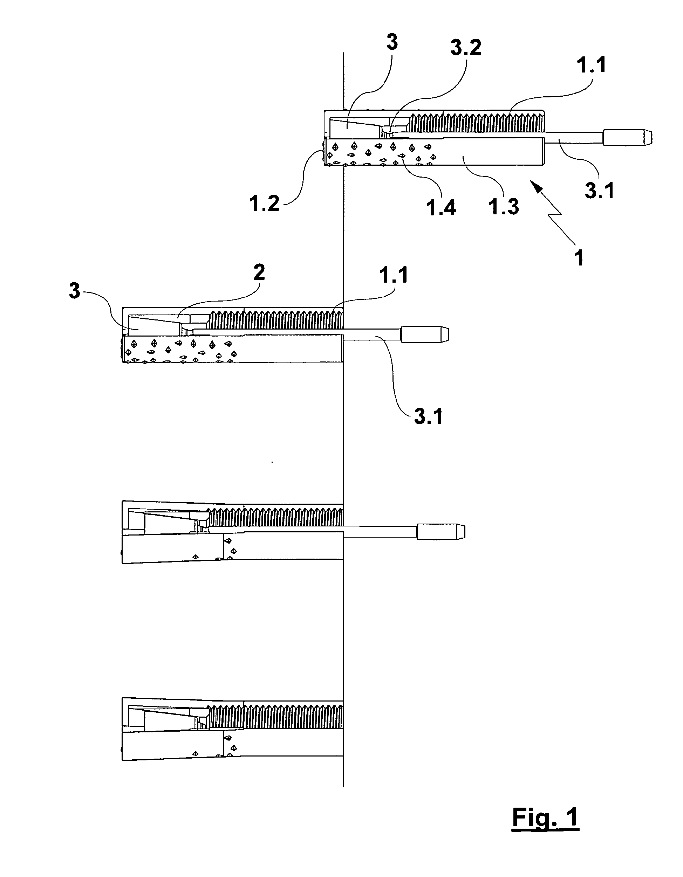

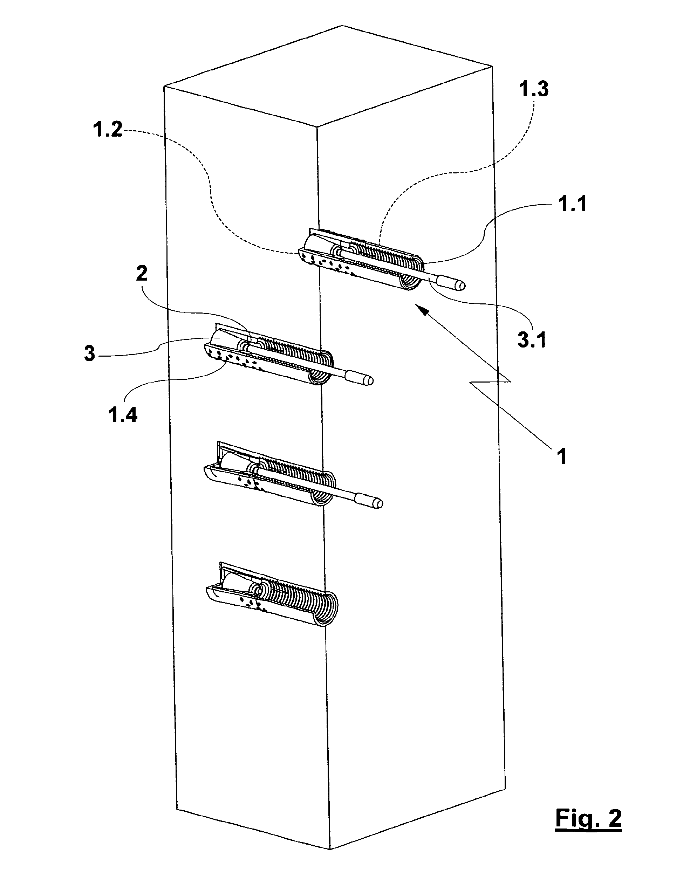

In einem Ausführungsbeispiel, gemäß Fig.1, wurde vorzugsweise eine einerseits, beispielsweise vierfach geschlitzte und andererseits mit einem Innengewinde versehener Metallhülse 1 benutzt. Die Metallhülse 1 wird an einer, in eine Betonwand eindringenden Stirnfläche 1.2 und an einem Teil der sich daran anschließenden Umfangsfläche 1.3 vorzugsweise mit, galvanisch aufgebrachten Diamant- und synthetischen Diamantsplitter 1.4 versehen, die sich bis zum Ende der Schlitze der vierfach geschlitzten Metallhülse 1 erstrecken. In die so vorbehandelte Metallhülse 1 werden eine Spannhülse 2 und ein Spannkonus 3 in die vierfach geschlitzte Metallhülse 1 eingesetzt. Der an dem Spannkonus 3 einstückig angeformte Auszugsbolzen 3.1 ragt rückseitig aus der Metallhülse 1 heraus. Die so vormontierte Metallhülse 1 wird mit dem herausragenden Auszugsbolzen 3.1 auf einen, im Verfahren nicht näher beschriebenen, Adapter gesteckt, der mit einer kompakten, für Gesteine und Materialien aller Art nutzbaren, Elektrobohrmaschine kompatibel ist. In nur einem Arbeitsgang, gemäß Fig.1 und Fig.2, der sich in der Reihenfolge der Durchführung, von oben nach unten dargestellten vier Phasen vollzieht, wird mit der Elektrobohrmaschine die auf den Adapter gesteckte komplettierte Metallhülse 1 unter Rotation als Bohrer fungierend, gemäß Phase eins auf die Bohrstelle aufgesetzt und gemäß Phase zwei, bündig in den Beton eingelassen. Während des Rotationsvorganges wird gleichzeitig die Metallhülse 1, gemäß Phase drei, im geschlitzten Innenbereich, durch die Spannhülse 2 über den Spannkonus 3 hinterschnitten und aufgespreizt. Nach dem bündigen Sitz der Metallhülse 1 im Beton und deren gleichzeitigen Hinterschneidung und Aufspreizung wird die Rotation ausgeschaltet und der Spannkonus 3 mit dem Auszugsbolzen 3.1 durch hohen Druck verspannt, bis, gemäß Phase vier, des Arbeitsganges, der Auszugsbolzen 3.1 durch eine, zwischen dem Spannkonus 3 und dem Auszugsbolzen 3.1 angeformte Sollbruchstelle 3.2 am Spannkonus 3 abbricht und herausfällt oder herauszunehmen ist. Der so in einem Arbeitsgang eingesetzte Dübel kann nun als solcher benutzt werden. Als Metallhülsen 1 können auch handelsübliche, mehrfach geschlitzte Metallspreizdübel mit Innengewinde verwendet werden, wenn deren, in das Material eindringende Stirnfläche 1.2 keine zentrische Durchgangsbohrung aufweist.

Die Ausstattung der Metallhülse 1 an ihrer Stirnfläche und der daran anschließenden Umfangsfläche 1.3 mit unterschiedlichen Schneitmaterialien gestattet beispielsweise deren Anpassung an die verschiedenen zu bearbeitenden Materialien. So eignen sich Diamantsplitter und synthetische Diamantsplitter 1.4 besonders zum Bohren von Gestein und armierten Beton, wobei eine Mischung beider Bestandteile zu bevorzugen ist. Polykristalline Diamantsplitter 1.4 sind zum Bohren von Beton und Mauerwerk geeignet und Hartmetallsplitter 1.4 werde zum Bohren von Stahl, Ytong, Holz und dergleichen bevorzugt. Es ist selbstverständlich auch möglich die Metallhülse 1 an Stelle der genannten Schneidmaterialien auch mit einem gesinterten Diamantsegment 1.5 zu versehen.

Zusammenfassend ist festzustellen, daß die vorbehandelten und als Baugruppe vormontierten Metallhülsen nach dem erfindungsgemäßen Verfahren das bohren und setzen von mit hohen Kräften belastbaren Dübeln mit hoher Zeit-und Kosteneinsparung sowie mit erheblicher Reduzierung des bisherigen Vibrations- und Lärmpegels in nur einem einzigen Arbeitsgang gestatten.

### Aufstellung der verwendeten Bezugszeichen

- 1: Metallhülse,
- 1.1: Innengewinde,
- 1.2: Stirnfläche,
- 1.3: Umfangsfläche,
- 1.4: Diamant- und/oder synthetische Diamantsplitter, polykristalline Diamantsplitter oder Harmetallsplitter,
- 1.5: gesintertes Diamantsegment
- 2.: Spannhülse,
- 3.: Spannkonus,
- 3.1: Auszugspolzen,
- 3.2: Sollbruchstelle,

## Patentansprüche

1. Verfahren zum setzen von mehrfach geschlitzten und mit einem Innengewinde versehenen Metalldübeln in Gestein, armierten Beton, Beton und Mauerwerk sowie Stahl, Ytong, Holz oder dergleichen, bestehend aus einer, einerseits mehrfach geschlitzten und andererseits mit einem Innengewinde (1.1) versehenen Metallhülse (1), und in der eine mehrfach geschlitzte Spannhülse (2) und ein Spannkonus (3) mit Auszugsbolzen (3.1) und Sollbruchstelle (3.2) angeordnet ist, **dadurch gekennzeichnet,**
**daß** die Metallhülse (1) an einer, in das Material eindringenden, Stirnfläche (1.2), die keine mittige Bohrung aufweist, und an einem Teil der sich daran anschließenden äußeren Umfangsfläche (1.3) mit galvanisch aufgetragenen Diamant- und/oder synthetischen Diamantsplittern, polykristallinen Diamantsplittern, Hartmetallsplittern (1.4) oder mit einem gesinterten Diamantsegment (1.5) versehen wird,
**daß** die mehrfach geschlitzte Spannhülse (2) und der Spannkonus (3) mit dem einstückig angeformten Auszugsbolzen (3.1) und der Sollbruchstelle (3.2), vor dem Setzvorgang in die mehrfach geschlitzte Metallhülse (1) eingesetzt und als Baugruppe vormontiert werden, wobei der Auszugsbolzen (3.1) rückseitig aus der Metallhülse (1) herausragt,
**daß** die vormontierte Metallhülse (1) auf einen Adapter gesteckt wird, der mit einer kompakten, für Gesteine und Materialien aller Art nutzbaren, Elektrobohrmaschine kompatibel ist und über den die Metallhülse (1) bei Rotation als Bohrer fungiert, bündig in das Gestein eingelassen und während des Rotationsvorganges die Metallhülse (1) im geschlitzten Innenbereich, durch die Spannhülse (2) und den Spannkonus (3), hinterschnitten und somit aufgespreizt wird, wobei der so entstehende Hinterschnitt die Haltekraft des Dübels um ein Mehrfaches der bisherigen Setzverfahren erhöht und
**daß** anschließend die Rotation ausgeschaltet und der Spannkonus (3) mit dem Auszugsbolzen (3.1) verspannt wird, bis der Auszugsbolzen (3.1) durch die, zwischen dem Spannkonus (3) und dem Auszugsbolzen (3.1) angeformte Sollbruchstelle (3.2) am Spannkonus (3) abbricht und aus der Metallhülse (1) herausfällt oder herauszunehmen ist.

2. Verfahren nach Anspruch 1, **dadurch gekennzeichnet, daß** die galvanisch aufgetragenen Diamant- und/oder synthetischen Diamantsplitter, polykristallinen Diamantsplitter, Hartmetallsplitter (1.4) oder das gesinterte Diamantsegment (1.5) auf der gesamten zur Verfügung stehenden, an der in das Gestein eindringenden mehrfach geschlitzten Stirnfläche (1.2) und auf der sich daran anschließenden Umfangsfläche (1.3) bis zum Ende der axial angeordneten Schlitze der Metallhülse (1) angeordnet sind.

3. Verfahren nach Anspruch 2, **dadurch gekennzeichnet, daß** die Stärke der, auf die Metallhülse (1), galvanisch aufgetragenen, Diamant- und/oder synthetischen Diamantsplitter, polykristallinen Diamantsplitter, Hartmetallsplitter (1.4) oder des gesinterten Diamantsegments (1.5) so dimensioniert ist, daß sie beim Bohrvorgang mit der Metallhülse (1) im wesentlichen verbraucht wird.

4. Verfahren nach einem der vorhergehenden Ansprüche, **dadurch gekennzeichnet, daß** als Metallhülsen (1) handelsübliche, mehrfach geschlitzte Metallspreizdübel mit Innengewinde benutzbar sind, deren, in das Material eindringende, Stirnfläche (1.2) keine zentrische Bohrung aufweist.
